# EUROPÄISCHE PATENTSCHRIFT

(11) **EP 0 685 679 B1**
(45) Veröffentlichungstag und Bekanntmachung des Hinweises auf die Patenterteilung: **08.07.1998**
(21) Anmeldenummer: 95105152.3
(22) Anmeldetag: 06.04.1995
(51) Int. Cl.: F16L 41/06

(54) **Vorrichtung zur Bearbeitung eines Werkstücks**
Device for working on a workpiece
Dispositif servant à traiter une pièce

(30) Priorität: 30.05.1994 DE 9408836 U
(43) Veröffentlichungstag der Anmeldung: 06.12.1995
(73) Patentinhaber: Mittelmann Armaturen GmbH + Co. KG, D-42489 Wülfrath (DE)
(72) Erfinder: Meyer, Jürgen, Dipl.-Ing., D-40822 Mettmann (DE)
(74) Vertreter: Eichler, Peter, Dipl.-Ing.

(56) Entgegenhaltungen:
- DE-C- 688 521
- DE-U- 9 316 819
- GB-A- 2 254 119
- US-A- 2 427 994

## Beschreibung

Die Erfindung bezieht sich auf eine Vorrichtung zur Bearbeitung eines Werkstücks, insbesondere Anbohrarmatur für fluidführende Rohre, mit einer rohrumgreifenden Verbindungseinheit, die eine Verbindungsbohrung hat, deren Achse radial auf dem Mittelpunkt einer Rohrbohrung steht und in deren Gewinde ein Armaturengehäuse mit einem Anschlußstutzen eingeschraubt ist, mit einem zwischen der Verbindungseinheit und dem Rohr um die Rohrbohrung herum angeordneten Dichtungsring, und mit einer das Gewinde der Verbindungsbohrung abdichtenden, von dem Anschlußstutzen beaufschlagten Schutzhülse.

Eine derartige Vorrichtung ist aus der DE 38 08 674 A1 bekannt. Der Anschlußstutzen der bekannten Vorrichtung hat ein Innengewinde, in das die mit einem Außengewinde versehene Schutzhülse eingeschraubt ist. An ihrem unteren, rohrseitigen Ende ragt die Schutzhülse aus dem Anschlußstutzen heraus und mit einem am Außenumfang gewindefreien, abgesetzten Ende in die Bohrung des Rohres hinein. Die Schutzhülse besteht aus einem Kunststoff, der in die Rohrbohrung hineingepreßt werden kann und Kontakt mit deren blanker Wandung bekommt. Damit soll verhindert werden, daß die Rohrwandung korrosiv angegriffen wird, oder daß sich an der Rohrwandung Inkrustationen bilden, die den Durchtrittsquerschnitt verringern. Die bekannte Schutzhülse bildet ein das Rohr und die Armatur mechanisch direkt koppelndes Bauteil, unter Überbrückung der Verbindungseinheit, von der die Armatur ebenfalls und bauptsächlich mit dem Rohr mechanisch gekoppelt wird. Relativbewegungen zwischen der Armatur und dem Rohr wirken sich infolge der nur geringen mechanischen Stabilität der Schutzhülse dahingehend aus, daß diese ihre Abdichtungswirkung an der Rohrbohrung nur unvollkommen erfüllen kann. Es kann infolgedessen dazu kommen, daß Fluid des Rohres zwischen den Außenumfang der Schutzhülse und die Verbindungsbohrung gelangt und unerwünschterweise deren Gewinde korrodiert oder sogar inkrustiert, auch im Bereich des eingeschraubten Anschlußstutzens. Es kann hier infolgedessen zu unerwünschten Erscheinungen kommen, wie ebenfalls auch im Bereich der oberen, von der Schutzhülse freien Gewindegänge des Innengewindes des Anschlußstutzens. Die bekannte Vorrichtung schützt also nur unvollkommen gegen Korrosion und Inkrustation. Außerdem gibt es Anwendungsfälle, bei denen die Rohrbohrung nicht geschützt werden muß. Das ist beispielsweise bei Kunststoffrohren der Fall.

Der Erfindung liegt die Aufgabe zugrunde, eine Vorrichtung mit den eingangs genannten Merkmalen so zu verbessern, daß ein vollständiger Schutz zumindest der Verbindungsbohrung der Verbindungseinheit erreicht wird.

Diese Aufgabe wird dadurch gelöst, daß die Schutzhülse in einem rohrseitigen Verbindungsbohrungsabschnitt gewindeanliegend angeordnet ist, und daß das Ende des Anschlußstutzens dicht auf das Ende der Schutzhülse gedrückt ist.

Für die Erfindung ist von Bedeutung, daß die Schutzhülse nicht in ein Innengewinde des Anschlußstutzens der Anbohrarmatur eingeschraubt ist, sondern sich in einem rohrseitigen Verbindungsbohrungsabschnitt befindet. Hier ist die Schutzhülse gewindeanliegend ausgebildet, deckt also das Gewinde der Verbindungsbohrung gegen Fluid vollständig ab. Es kann weder zu Inkrustationen am Gewinde kommen, noch kann das Gewinde von aggressiven Medien angegriffen werden, was insbesondere von Bedeutung ist, wenn die Verbindungseinheit aus Eisenguß besteht, der üblicherweise ungeschützt gegen solche korrosiven Medien eingesetzt wird, weil sonst das Einschrauben eines Teils bzw. des Anschlußstutzens in ein mit einer Schutzschicht versehenes Gewinde unerträglich erschwert oder verhindert wird. Um das Gewinde der Verbindungsbohrung vollständig zu schützen, ist das Ende des Anschlußstutzens dicht auf das Ende der Schutzhülse gedrückt. Ein Zutritt von Fluid zum Gewinde der Verbindungsbohrung wird damit überall ausgeschlossen. Es entsteht eine vollständig inkrustationsfreie und nicht korrosionsgefährdete Gewindeverbindung zwischen dem Anschlußstutzen und der Schutzhülse einerseits und der Verbindungsbohrung andererseits.

Die Vorrichtung kann in einfacher Weise dadurch ausgestaltet werden, daß die Schutzhülse in das Gewinde der Verbindungsbohrung eingeschraubt ist. Das Gewinde der Verbindungsbohrung wird damit vollflächig von der Schutzhülse durch deren Gewindegänge und Gewindeflächen abgedeckt, so lang sich die Schutzhülse erstreckt. Das Einschrauben der Schutzhülse kann in einfacher Weise fabrikseitig erfolgen, beispielsweise indem rohrseitig an der Schutzhülse vorhandene Mitnahmemittel von einem Werkstück drehbeaufschlagt werden, wodurch eine Schutzhülse zum Einsatz kommen kann, deren dem Anschlußstutzen zugewendete Stirnfläche vollständig glatt sein kann.

Es ist aber auch möglich, die Vorrichtung so auszugestalten, daß die Schutzhülse in die Verbindungsbohrung eingepreßt ist. Ein solches Einpressen erfolgt in einen glatten Abschnitt der Verbindungsbohrung, aber auch insbesondere dann, wenn derjenige Gewindebereich der Verbindungsbohrung, in den der Anschlußstutzen eingeschraubt werden soll, nicht durch das Einpressen der Schutzhülse beschädigt wird.

Im Hinblick auf die vorbeschriebenen Möglichkeiten zum Einbau der Schutzhülse in die Verbindungsbohrung kann der Werkstoff der Schutzhülse gewählt werden. Für den Fall des Einschraubens der Schutzhülse kann diese vorteilhafterweise aus korrosionsbeständigem metallischen Werkstoff bestehen, so daß die Schutzhülse in erheblichem Maße druckbeaufschlagt werden kann und demgemäß sicher abdichtet und auch den benachbarten Bereich des Verbindungsstutzens versteift, wobei die Dauerhaftigkeit des Werkstoffs, beispielsweise Messing, von Bedeutung sein kann. Wenn die Schutzhülse in das Gewinde der Verbindungsbohrung eingepreßt werden soll, ist es vorteilhaft, die Vorrichtung so auszugestalten, daß die Schutzhülse aus Kunststoff besteht. Die Elastizität bzw. die Plastizität des Kunststoffs kann so bestimmt werden, daß er die Abdichtungswirkung im Schutzhülsenbereich der Verbindungsbohrung gewährleistet, ohne die zum Einschrauben des Anschlußstutzens erforderliche Funktionsfähigkeit des für den Anschlußstutzen vorgesehenen Gewindeabschnitts der Verbindungsbohrung zu beeinträchtigen. Es kann aber natürlich auch eine aus Kunststoff bestehende Schutzhülse in das Gewinde der Verbindungsbohrung eingeschraubt werden.

Wenn erreicht werden soll, daß das Gewinde der Verbindungsbohrung weitergehend gegen Zutritt von Fluid durch den zwischen der Innenwand der Verbindungsbohrung und der Außenwand der Schutzhülse gelegenen Bereich geschützt werden soll, kann die Vorrichtung so ausgebildet werden, daß die Verbindungsbohrung rohrseitig eine Ringschulter hat, und daß die Schutzhülse eine Ringfläche hat, mit der die Schutzhülse gegen die Ringschulter gepreßt ist. Der dadurch zustande kommende axiale Preßsitz der Schutzhülse in der Verbindungseinheit dichtet in erheblichem Maße und besorgt unter anderem auch, daß die Schutzhülse in eine genau vorbestimmte Lage eingesetzt werden kann, was von Bedeutung ist, wenn es auf die genaue Anordnung des rohrseitigen Endes der Schutzhülse in Bezug auf den Außenumfang des Rohrs ankommt.

Zweckmäßigerweise wird die Vorrichtung so gestaltet, daß der Anschlußstutzen und die Schutzhülse einen gleich großen Innendurchmesser aufweisen. Es ergibt sich ein strömungsmäßig ungestörter glatter Durchtritt ohne Inkrustationsmöglichkeiten.

Im vorstehend beschriebenen Sinne kann die Vorrichtung dahingehend weitergebildet werden, daß die Verbindungsbohrung von dem Anschlußstutzen und der Schutzhülse über ihre gesamte Länge anliegend abgedeckt ist. Zugleich wird erreicht, daß die Verbindungsbohrung der Verbindungseinheit auf ihrer gesamten Länge abgedeckt ist, was bei aggressiven Medien von Bedeutung sein kann.

Während sich die vorbeschriebenen Ausgestaltungen der Vorrichtung insbesondere auf den Schutz der Verbindungsbohrung der Verbindungseinheit konzentrieren, kann es z.B. beim Einsatz von Stahl- oder Gußrohren auch von Bedeutung sein, die blanken Flächen der Rohrbohrung zu schützen. Diese Flächen sind aufgrund des Bohrvorgangs ohne schützenden Überzug und unterliegen daher der Korrosion bzw. der Inkrustationsgefahr. Es ist ein besonderer Vorteil der vorliegenden Erfindung, so ausgestaltet werden zu können, daß diese Gefahr verringert bzw. ausgeschlossen wird. Das kann dadurch erreicht werden, daß die Bohrungswand mit der der Verbindungsbohrung fluchtenden Rohrbohrung von einer Hülse vollständig abgedeckt ist, daß die Hülse nur wenig länger als das Rohr dick ist, und daß die Hülsenränder die Rohrbohrungskanten umklammern. Diese spezielle Hülse ist also nur im Bereich der Bohrlochwandung vorhanden. Sie hat keine mechanische Verbindung mit der Schutzhülse der Verbindungsbohrung. Sie braucht infolgedessen auch nur dann eingesetzt zu werden, wenn sie zum Schutz der Rohrbohrung erforderlich ist. Dann kann ihr Sitz durch die Verbindungseinheit bzw. durch die Anbohrarmatur nicht beeinträchtigt werden. Die die Rohrbohrungskanten umklammernden Hülsenränder sorgen für einen einwandfreien und dauerhaften formschlüssigen Sitz. Es ist nicht erforderlich, die Hülse in axialer Richtung einzupressen, so daß die damit verbundenen Risiken vermieden werden, wie auch der bauliche Aufwand durch Bauteiltoleranzen und die Montagesorgfalt. Bei einer entsprechenden Normierung braucht für die Vorrichtung nur eine einzige Ausführungsform einer Schutzhülse bereit gehalten zu werden. Bei unterschiedlichen Durchmessern der Rohrbohrung genügt es, dementsprechend unterschiedliche Hülsenrohlinge bereit zu halten. Es ist nicht erforderlich, die Schutzhülse und die Hülse für die Rohrbohrung baulich aufeinander abzustimmen. Es entfällt Werkstoffaufwand, der bei einer Baueinheitlichkeit bzw. Einstückigkeit von Scbutzhülse und Hülse für die Rohrbohrung zu treiben wäre. Letztlich ist die Zweiteiligkeit von Schutzhülse und Hülse für die Rohrbohrung auch dahingehend von Vorteil, daß die Werkstoffe beider unabhängig voneinander nur im Hinblick auf ihre jeweiligen Funktionen in der Verbindungseinheit bzw. im Rohr abgestimmt werden können. Das gilt insbesondere für die Auswahl des Werkstoffs der Hülse der Rohrbohrung, da diese die Rohrbohrungskanten formschlüssig umklammern soll und infolgedessen entsprechend leicht verformbar sein muß, was der Fall ist, wenn die Hülse beispielsweise aus Kupfer besteht.

Um zu erreichen, daß die Hülse mit der Rohrbohrung fest verpreßt werden kann, wird die Vorrichtung so ausgebildet, daß sie eine Druckhülse hat, die einen Druckstab abdichtend umschließt, und daß rohrseitig zwischen dem rohrseitigen Hülsenende und dem rohrseitigen Druckstabende eine den Druckstab umgebende elastische Quetschhülse vorhanden ist, deren Außendurchmesser in Abhängigkeit von der relativen Axialstellung der Druckhülse und des Druckstabs veränderlich ist. Wird die elastische Quetschhülse zusammengedrückt, vergrößert sich ihr Außendurchmesser. Infolgedessen kann die am Rohr zu befestigende Hülse von der Quetschhülse gehalten und in die Rohrbohrung eingeführt werden. An der Montagestelle wird die Quetschhülse weiter axial beaufschlagt, so daß sie die in der Rohrbohrung anzuordnende Hülse dehnt, bis diese mit der Rohrbohrung bzw. deren Bohrungskanten verpreßt ist.

Um die Quetschhülse zwischen dem Ende der Druckhülse und dem Druckstab festzulegen, wird die Vorrichtung so ausgebildet, daß das Druckstabende ein Gewindeende hat, auf das ein Druckstück aufgeschraubt ist, das die Quetschhülse gegen das Druckhülsenende drückt. Mit Hilfe des Druckstücks kann auch eine Vorspannung der Quetschhülse eingestellt werden, z.B. zum Halten der Hülse für die Rohrbohrung beim Einsetzen.

Wenn der Außendurchmesser der Druckhülse größer ist, als der Außendurchmesser der ungespreizten Quetschhülse, kann die in der Rohrbohrung anzuordnende Hülse gegen den radialen Überstand der Druckhülse geschoben und damit in Bezug auf die Quetschhülse genau positioniert werden.

Es ist vorteilhaft, die Vorrichtung so auszugestalten, daß auf einem Kopf der Druckhülse ein Exzenterhebel abstützbar ist, der am oberen Ende des Druckstabs schwenkbeweglich ist. Mit dem Exzenterhebel kann eine Halterung der in der Rohrbohrung anzuordnenden Hülse auf der Quetschhülse im erforderlichen Maße feinfühlig erzeugt werden und es ist darüber hinaus auch möglich, die zur Verformung der Quetschhülse und damit auch der in der Rohrbohrung anzuordnenden Hülse erforderliche Kraft im benötigten Umfang aufzubringen.

Es ist vorteilhaft, die Vorrichtung so auszubilden, daß die Druckhülse von einer Haltehülse gleitbar umschlossen ist, die an ihrem unteren Ende ein Außengewinde, einen Einschraubanschlag und Schraubwerkzeugkupplungsmittel aufweist. Mit Hilfe des Außengewindes kann die Vorrichtung mit einem Ventil gekoppelt werden, um so eine Längsführung für die Druckhülse bzw. den Druckstab zu erreichen, damit der Quetschvorgang einwandfrei durchgeführt wird und nicht etwa durch Verwackeln des Setzwerkzeugs oder dessen Verkippen zu beeinträchtigen ist.

Eine Weiterbildung der vorbeschriebenen Vorrichtung besteht darin, daß die Haltehülse ein weiteres Außengewinde hat, auf dem eine mit der Druckhülse starr verbundende Führungsmutter vorhanden ist, an der Schraubwerkzeugkupplungsmittel vorhanden sind. Infolgedessen ist die Druckhülse durch Verschrauben an der Haltehülse längsverstellbar und es ist möglich, das untere Ende der Haltehülse und damit die in der Rohrbohrung anzubringende Hülse genau zu positionieren.

Die Erfindung wird anhand von in der Zeichnung dargestellten Ausführungsbeispielen erläutert. Es zeigt:
- Fig.1: einen Querschnitt durch eine erste erfindungsgemäße Vorrichtung im Querschnitt,
- Fig.2: eine Variante der Ausführungsform der Fig.1,
- Fig.3: eine weitere Ausführungsform der Erfindung in vereinfachter Darstellung,
- Fig.4: eine Variante der Fig.3,
- Fig.5: eine Schnittdarstellung durch eine Vorrichtung mit einem Setzwerkzeug, das an einem Ventil befestigt ist, und
- Fig.6: eine der Fig.5 ähnliche Darstellung des Setzgeräts, welches eine in der Rohrbohrung anzuordnende Hülse dort hält.

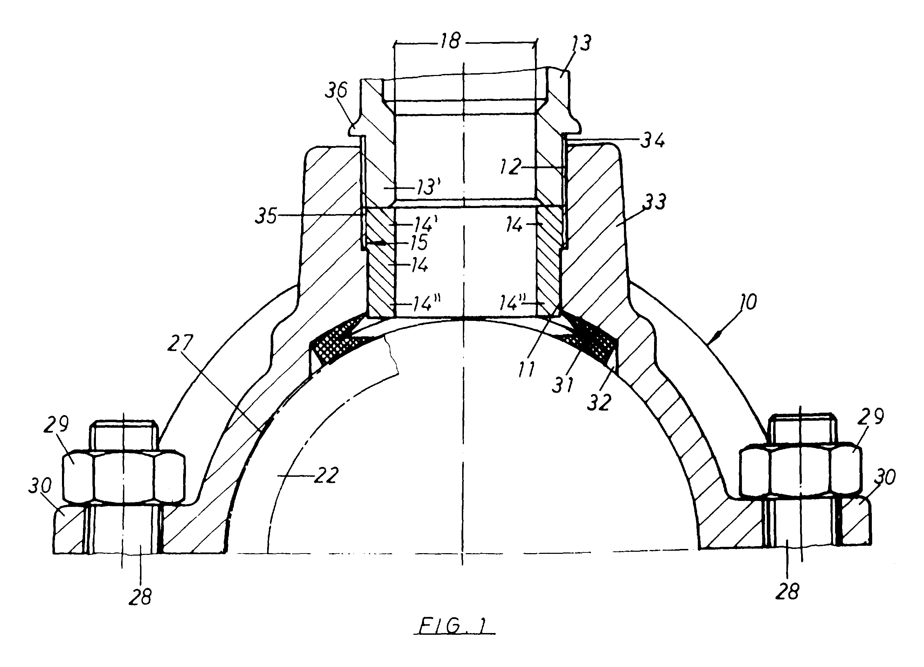

Vorrichtungen mit den eingangs genannten Merkmalen dienen dazu, fluidführende Rohre nach deren Verlegung mit einer Anschlußleitung zu versehen. Es kann eine an sich bekannte Anbohrarmatur eingesetzt werden, die mit dem Rohr fluiddicht verbunden werden muß. Um ein Loch in das Rohr bohren zu können, ist die Anbohrarmatur üblicherweise mit einer Absperreinrichtung versehen, die so ausgebildet ist, daß eine abgedichtete Herstellung der Rohrbohrung und deren bedarfsweise Abdichtung möglich sind. Diese Absperreinrichtung kann integraler Bestandteil der Anbohrarmatur sein und ist als solche bekannt, so daß sie hier nicht dargestellt wurde. Vielmehr wurde lediglich ein Anschlußstutzen 13 des an sich bekannten Armaturengehäuses oder eines Ventils dargestellt, welches die an sich bekannte Absperreinrichtung aufweisen kann. Dieser Anschlußstutzen 13 hat einen Innendurchmesser 18, der so groß sein muß, daß er ein Durchstecken eines Bohrwerkzeugs zum Herstellen einer Rohrbohrung 20 im Rohr 22 erlaubt. Dieses Rohr 22 ist in Fig.1 lediglich schematisch angedeutet. Es wird auf seinem Außenumfang 27 von einer Verbindungseinheit 10 umfaßt, die gemäß der Darstellung halbschalenartig ausgebildet ist. Die untere, nicht dargestellte Hälfte der Verbindungseinheit 10 kann beispielsweise ein Zugband sein, das an seinen Enden die dargestellten Verbindungsbolzen 28 aufweist und mit Hilfe der Verbindungsmuttern 29, die sich an Flanschabschnitten 30 der schalenartigen Verbindungseinheit 10 abstützen, so gegen die untere Hälfte des Rohrs 22 gezogen wird, daß die halbschalenartige obere Hälfte der Verbindungseinheit 10 unverrückbar auf dem Außenumfang 27 des Rohrs 22 festgeklemmt ist. Derjenige Bereich des Rohrs 22, in dem eine Rohrbohrung 20 hergestellt werden soll, ist von einem Dichtungsring 31 umschlossen, der in einer Ausnehmung 32 eines Verbindungsstutzens 33 angeordnet ist, welcher in der Richtung des Anschlußstutzens 13 in Bezug auf das Rohr 22 radial vorspringt. Die Ausnehmung 32 und der Dichtungsring 31 sind so dimensioniert, daß sich bei vorschriftsmäßigem Anpressen der Verbindungseinheit 10 gegen den Außenumfang 27 des Rohrs 22 eine zuverlässige Abdichtung ergibt, die jeden bestimmungsgemäßen Druck des vom Rohr 22 geführten Fluids zu beherrschen vermag.

Die dargestellte halbschalenförmige Verbindungseinheit 10 bzw. ihr Verbindungsstutzen 33 weisen eine radiale Verbindungsbohrung 11 auf, die in ihrem oberen Bereich mit einem Gewinde 12 versehen ist, in das der Anschlußstutzen mit einem Außengewinde 34 eingeschraubt ist. Damit das Gewinde 12 der Verbindungsbohrung 11 vollständig geschützt wird, ist eine Schutzhülse 14 vorhanden, die rohrseitig des Anschlußstutzens 13 angeordnet ist. Sie besteht aus Kunststoff und ist in die Verbindungsbohrung 11 axial eingepreßt, so daß sie mit ihrem anschlußstutzenseitigen Ringbund 35 in den rohrseitigen Verbindungsbohrungsabschnitt 15 eingreift, in dem sie gewindeanliegend abdichtet, wobei der Ringbund 35 radialdruck- und werkstoffabhängig auch in das Gewinde 12 eingreifen kann. Zur Beförderung dieser Abdichtung und damit das Gewinde 12 der Verbindungsbohrung 11 über dessen gesamte Länge zuverlässig abgedichtet ist, drückt der Anschlußstutzen 13 mit seinem Ende 13' auf das Ende 14' der Schutzhülse 14. Das Gewinde 34 des Anschlußstutzens 13 ist lang genug, um den erforderlichen Druck auf die Schutzhülse 14 ausüben zu können, ohne daß der Anschlagbund 36 auf dem Verbindungsstutzen 33 aufsitzen kann.

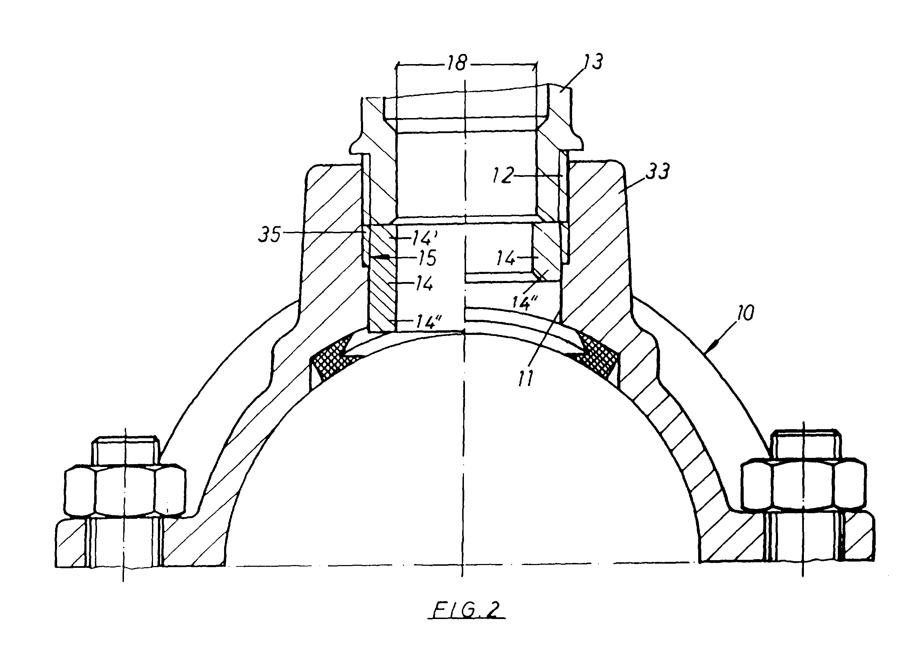

Es ist ersichtlich, daß die Schutzhülse 14 unterschiedlich lang sein kann. In der rechten Hälfte der Fig.2 ist dargestellt, daß die Schutzhülse 14 den Verbindungsbohrungsabschnitt 15 lediglich mit einem kurzen Hülsenende 14'' überragt, während in Fig.2 auf der linken Seite dargestellt ist, daß die Verbindungsbohrung rohrseitig vollständig von der Schutzhülse 14 abgedeckt ist, weil sie sich mit einem Ende 14'' aus dem Verbindungsstutzen 33 hinaus bis in den Bereich der Dichtung 31 erstreckt. Auf diese Weise ist das Ende 14" der Schutzhülse 14 dicht in der Nachbarschaft der Rohrbohrung des Rohrs 22 angeordnet, so daß sich insgesamt ein im wesentlichen glatter Durchströmungsquerschnitt gleich großen Innendurchmessers 18 bei glatter Innenwand ergibt.

Fig.2 zeigt eine der Fig.1 sehr ähnliche Darstellung, so daß bezüglich der übereinstimmenden Bauteile auf die Fig.1 verwiesen werden kann. Abweichend ist die Ausgestaltung der Schutzhülse 14 im Bereich ihres Ringbunds 35, mit dem sie einen Teil des Gewindes 12 der Verbindungsbohrung 11 gewindeanliegend abdeckt, so daß also ein rohrseitiger Verbindungsbohrungsabschnitt 15 von der Schutzhülse 14 gegen Fluidzutritt geschützt ist. Der Ringbund 35 der Schutzhülse 14 ist bei diesem Ausführungsbeispiel als Gewinde ausgebildet, so daß die Schutzhülse in das Gewinde 12 der Verbindungsbohrung 11 hineingeschraubt werden kann, bis die Schutzhülse die abgebildete Stellung hat. Eine solche Schutzhülse 14 kann auch aus Metall bestehen. Auch diese Schutzhülse 14 wird an ihrem Ende 14' von dem Anschlußstutzen 13 druckbeaufschlagt, indem dieser in den Verbindungsstutzen 33 entsprechend stramm hineingeschraubt wird.

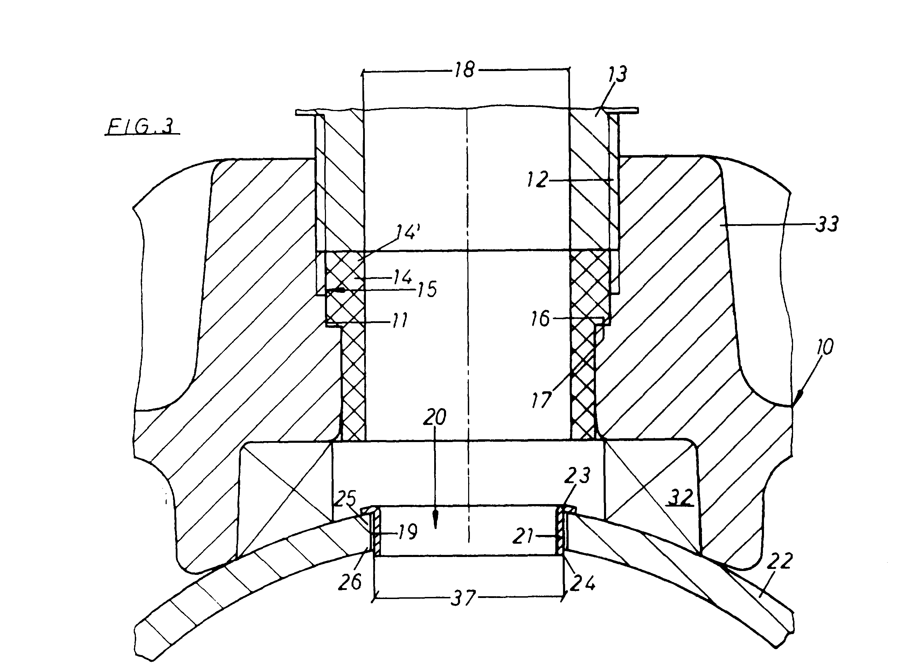

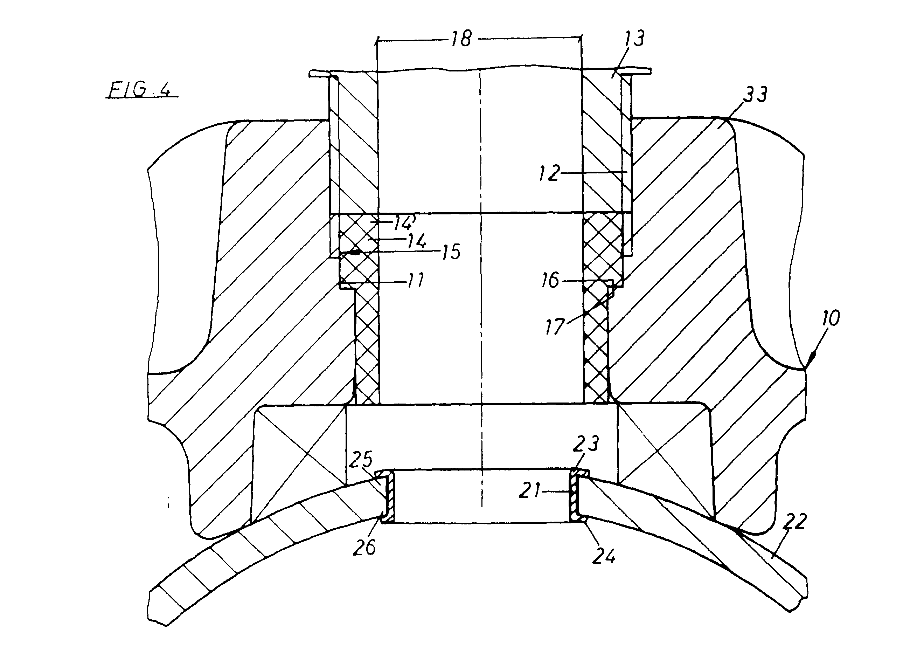

Um die Abdichtungswirkung der Schutzhülse 14 über die Abdichtungswirkung des Gewindes der Schutzhülse 14 hinaus zu steigern, ist die Verbindungsbohrung 11 rohrseitig gemäß Fig. 3,4 mit einer Ringschulter 16 versehen und die Schutzhülse 14 hat dazu passend eine Ringfläche 17, welche gegen die Ringschulter 16 der Schutzhülse 14 gepreßt ist. Es wird dadurch vermieden, daß die Schutzhülse 14 versehentlich zu tief in die Verbindungsbohrung 11 hineingedrückt wird und die Abdichtungswirkung wird gesteigert.

Die in den Fig.3,4 dargestellte Ausführungsform entspricht bezüglich der Ausgestaltung der Verbindungseinheit 10 im Bereich des Verbindungsstutzens 13 im wesentlichen den Ausgestaltungen der Fig.1,2, auch hinsichtlich der Ausbildung des Anschlußstutzens 13 und der Schutzhülse 14. Insoweit wird hierauf Bezug genommen. Abweichend, nämlich vergrößert, ist die rohrseitige Ausnehmung 32 des Verbindungsstutzens 33 dargestellt, um eine entsprechend groß dimensionierte Dichtung aufnehmen zu können. Eine solche groß dimensionierte Dichtung kommt insbesondere bei Stahlrohren oder Gußrohren zum Einsatz. Ein dementsprechendes Rohr 22 ist in den Fig.3,4 dargestellt. Fig.3 zeigt im Rohr 22 eine Rohrbohrung 20 mit einer zylindrischen Rohrbohrungswand 19, welche mit einem nicht dargestellten Werkzeug durch die Verbindungsbohrung 11 bzw. durch den Anschlußstutzen 13 und die Schutzhülse 14 hindurch hergestellt wurde. Der Durchmesser der Rohrbohrung 20 ist daher gleich oder kleiner dem Innendurchmesser 18.

Um die Bohrungswand 19 der Rohrbohrung 20 gegen aus dem Rohr 22 austretendes Fluid zu schützen, ist eine Hülse 21 vorgesehen, welche die Bohrungswand 19 vollständig abdeckt. Fig.3 zeigt, daß die Hülse 21 mit einem Außendurchmesser 37 versehen ist, der kleiner ist, als der Durchmesser der Rohrbohrung 20. Allerdings ist die Hülse 21 mit einem Hülsenrand 23 versehen, der aufgeweitet ist, so daß die Hülse 21 nicht durch die Rohrbohrung 20 hindurchgeschoben werden kann. Es ist daher ohne Risiko für eine falsche Montage möglich, die Hülse 21 durch den Anschlußstutzen 13 und die Schutzhülse 14 hindurch in die Rohrbohrung 20 einzusetzen, so daß sich der Hülsenrand 23 auf der Rohrbohrungskante 25 abstützt, wenn die Rohrbohrung 20 etwas kleiner ist, als der Innendurchmesser 18 des Anschlußstutzens 13 bzw. der Schutzhülse 14.

Im Vergleich zu Fig.3 zeigt Fig.4 den endgültigen Sitz der Hülse 21, der dadurch erreicht wird, daß die Hülse 21 mit einem Werkzeug aufgeweitet wird. Der rohraußenseitige Hülsenrand 23 umklammert dann die rohraußenseitige Rohrbohrungskante 25 formschlüssig und der rohrinnenseitige Hülsenrand 24 umklammert die rohrinnenseitige Rohrbohrungskante 26 formschlüssig, so daß für den erforderlichen strammen Sitz der Hülse 21 in der Rohrbohrung 20 gesorgt ist.

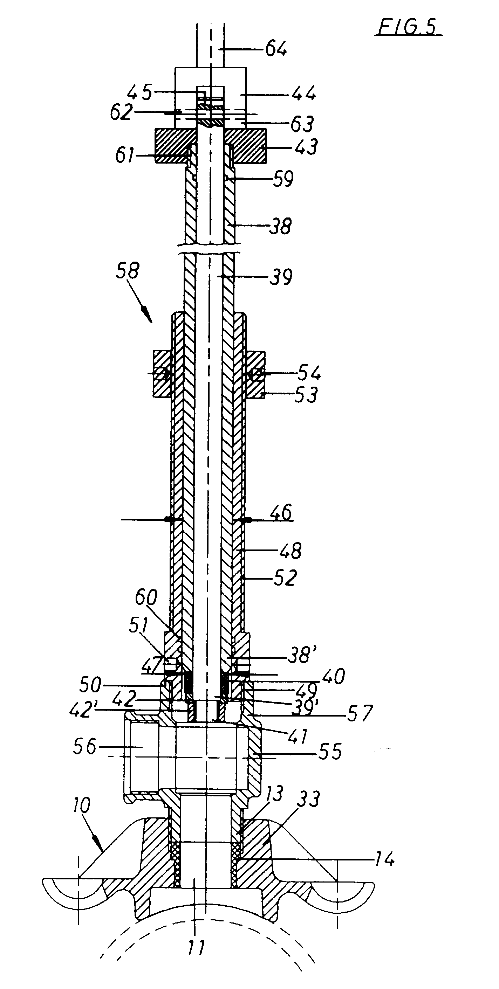

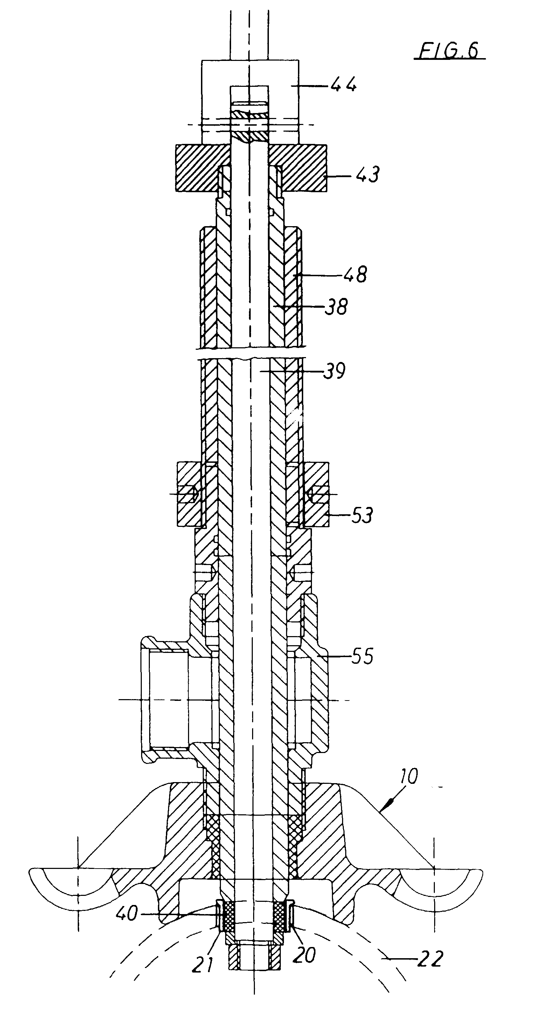

In den Fig.5,6 wurde eine Verbindungseinheit 10 dargestellt, deren Darstellung von den Fig.1 bis 4 nur geringfügig abweicht. In die Verbindungsbohrung 11 ist eine Schutzhülse 14 eingebaut, die vom Anschlußstutzen 13 in den Verbindungsstutzen 33 gedrückt ist. Der Anschlußstutzen 13 ist Bestandteil eines Ventilkörpers 55, der einen Seitenanschlußstutzen 56 für die Zu- oder Ableitung von Fluid zum in Fig.6 dargestellten Rohr 22 hat. Dessen Abdichtung zur Verbindungseinheit 10 ist hier nicht dargestellt.

Der Ventilkörper 55 ist mit einem Oberstutzen 57 versehen, in dessen Gewinde das Setzwerkzeug 58 der Vorrichtung eingeschraubt ist. Eine Haltehülse 48 ist ventilkörperseitig mit einem Außengewinde 49 versehen, welches so weit in das Gewinde des Oberstutzens 57 hineingeschraubt ist, daß ein Einschraubanschlag 50 der Haltehülse 48 zur Anlage am Oberstutzen 49 kommt. Das Einschrauben der Haltehülse 48 wird mit einem nicht dargestellten Schraubwerkzeug durchgeführt, welches in die Schraubwerkzeugkupplungsmittel 51 des durchmessergrößten zylindrischen Abschnitts der Haltehülse 48 eingreifen können. Die eingeschraubte Haltehülse 48 vermag dem Setzgerät 58 die vorteilhafte starre Verbindung mit der Verbindungseinheit 10 über den Ventilkörper 55 zu vermitteln, der nur beispielsweise dargestellt ist und auch als Anbohrarmatur gemäß dem oben beschriebenen Stand der Technik ausgebildet sein könnte.

Die Haltehülse 48 umschließt eine Druckhülse 38, die ihrerseits einen Druckstab 39 umschließt. Letzterer ist gleitbeweglich in der Druckhülse 38 gelagert und diese selbst ist gleitbeweglich in der Haltehülse 48 gelagert. Die Lagerung erfolgt jeweils abgedichtet. Die betreffenden Abdichtungen 59,60 sind lediglich schematisch dargestellt. Das obere Ende der Druckhülse 38 ist mit einem Kopf 43 starr verbunden, z.B. durch Einschrauben in ein Befestigungsgewinde 61. Der Druckstab 39 ist so ausgebildet, daß sein oberes Ende aus der Druckhülse 38 und deren Kopf 43 herausragt und hier eine Querbohrung zur Aufnahme eines Querstifts 62 hat, dessen über den Druckstab 39 seitlich vorstehende Enden jeweils in Seitenwangen 63 eines Exzenterhebels 44 eingreifen, die sich auf dem Kopf 43 abstützen. Die Ausbildung dieser Seitenwangen 63 ist derart exzentrisch, daß ein Verschwenken des Hebels 44 mit einem Betätigungsende 64 dazu führt, daß der Druckstab 39 mehr oder weniger aus dem Kopf 43 herausgezogen oder in diesen hineingesteckt werden kann. Dementsprechend ändert sich die Relativlage des rohrseitigen Hülsenendes 38' und des rohrseitigen Druckstabendes 39'. Das rohrseitige Druckstabende 39' ist mit einem Gewindeende 41 versehen, auf das eine Druckmutter 42' für ein Druckstück 42 aufgeschraubt ist. Zwischen diesem Druckstück 42 und dem Hülsenende 38' ist eine den Druckstab 39 umgebende Quetschhülse 40 angeordnet, die elastisch ausgebildet ist und ihren Außendurchmesser 47 verändert, wenn das Druckstück 42 infolge der Betätigung des Exzenterhebels 44 zum Hülsenende 38' hin oder von diesem weg verschoben wird.

Die vorbeschriebene Radiusänderung der elastischen Quetschhülse 40 kann dazu benutzt werden, um die in der Rohrbohrung 20 anzubringende Hülse 21 zu positionieren und mit der Rohrwand 19 zu verquetschen.

Dazu wird die Hülse 21 zunächst auf die ungespreizte Quetschhülse geschoben, wobei sie gegen das Hülsenende 38' stößt, da der Außendurchmesser 46 der Druckhülse 38 größer ist, als der Außendurchmesser 47 der ungespreizten Quetschhülse 40. Der Außendurchmesser der Druckhülse 38 ist so groß, daß die in der Rohrbohrung 20 anzuordnende Hülse 21 auch dann auf die Quetschhülse 40 aufgeschoben werden kann, wenn diese gemäß Fig.5 innerhalb des unteren Endes der Haltehülse 48 angeordnet ist. Geringfügiges Spreizen der Quetschhülse 40 sichert die Halterung der zu positionierenden Hülse 21 auch dann, wenn das Setzgerät 58 bereits vor seinem Einschrauben in den Oberstutzen 57 des Ventilkörpers 55 vorgenommen wurde.

Wenn die zu positionierende Hülse 21 aus der in Fig.5 dargestellten Stellung in die in Fig.6 dargestellte Stellung in der Rohrbohrung 20 verschoben werden soll, müssen der Druckstab 39 und die Druckhülse 38 gemeinsam verschoben werden. Hierzu ist die Haltehülse 48 mit einem Außengewinde 52 versehen, auf dem eine Führungsmutter 53 höhenverstellbar ist. Die Höhenverstellung erfolgt beispielsweise mit einer Schraubwerkzeug, welches in Schraubwerkzeugkupplungsmittel 54 eingreift. Eine Schraubverstellung führt dazu, daß die Führungsmutter die in Fig.6 dargestellte Stellung einnehmen kann. Die Verschraubung der Führungsmutter 53 bewirkt, daß der Kopf 43 und damit die daran feste Druckhülse 38 sowie der darin befindliche Druckstab 39 vertikal verstellt werden. Diese Verstellung kann erfolgen, bis die Hülse 21 mit ihrem Hülsenrand 23 auf der Rohrbohrungskante 25 gemäß Fig.3 aufsitzt. Dieses Aufsitzen ist beim Verdrehen der Haltehülse 48 zuverlässig zu ermitteln, so daß eine dementsprechend genaue Positionierung der Hülse 21 erfolgt. Anschließend kann der Exzenterhebel 44 betätigt werden, so daß eine weitere Spreizung der Quetschhülse 40 erfolgt, bis die Hülse 21 montiert ist. Danach wird die Quetschhülse 40 entspannt, der Druckstab 39 und die Druckhülse 38 werden nach oben verstellt und das Setzwerkzeug 58 kann ausgebaut werden.

## Patentansprüche

1. Vorrichtung zur Bearbeitung eines Werkstücks, insbesondere Anbohrarmatur für fluidführende Rohre, mit einer rohrumgreifenden Verbindungseinheit (10), die eine Verbindungsbohrung (11) hat, deren Achse radial auf dem Mittelpunkt einer Rohrbohrung (20) steht und in deren Gewinde (12) ein Armaturengehäuse mit einem Anschlußstutzen (13) eingeschraubt ist, mit einem zwischen der Verbindungseinheit (10) und dem Rohr um die Rohrbohrung (20) herum angeordneten Dichtungsring (31), und mit einer das Gewinde (12) der Verbindungsbohrung (11) abdichtenden, von dem Anschlußstutzen (13) beaufschlagten Schutzhülse (14), **dadurch gekennzeichnet,** daß die Schutzhülse (14) in einem rohrseitigen Verbindungsbohrungsabschnitt (15) gewindeanliegend angeordnet ist, und daß das Ende (13') des Anschlußstutzens (13) dicht auf das Ende (14') der Schutzhülse (14) gedrückt ist.

2. Vorrichtung nach Anspruch 1, **dadurch gekennzeichnet,** daß die Schutzhülse (14) in das Gewinde (12) der Verbindungsbohrung (11) eingeschraubt ist.

3. Vorrichtung nach Anspruch 1, **dadurch gekennzeichnet**, daß die Schutzhülse (14) in die Verbindungsbohrung (11) eingepreßt ist.

4. Vorrichtung nach Anspruch 1 oder 2, **dadurch gekennzeichnet,** daß die Schutzhülse (14) aus korrosionsbeständigem metallischen Werkstoff besteht.

5. Vorrichtung nach einem oder mehreren der Ansprüche 1 bis 3, **dadurch gekennzeichnet**, daß die Schutzhülse (14) aus Kunststoff besteht.

6. Vorrichtung nach einem oder mehreren der Ansprüche 1 bis 5, **dadurch gekennzeichnet**, daß die Verbindungsbohrung (11) rohrseitig eine Ringschulter (16) hat, und daß die Schutzhülse (14) eine Ringfläche (17) hat, mit der die Schutzhülse (14) gegen die Ringschulter (16) gepreßt ist.

7. Vorrichtung nach einem oder mehreren der Ansprüche 1 bis 6, **dadurch gekennzeichnet**, daß der Anschlußstutzen (13) und die Schutzhülse (14) einen gleich großen Innendurchmesser (18) aufweisen.

8. Vorrichtung nach einem oder mehreren der Ansprüche 1 bis 7, **dadurch gekennzeichnet**, daß die Verbindungsbohrung (11) von dem Anschlußstutzen (13) und der Schutzhülse (14) über ihre gesamte Länge anliegend abgedeckt ist.

9. Vorrichtung nach einem oder mehreren der Ansprüche 1 bis 8, **dadurch gekennzeichnet**, daß die Bohrungswand (19) mit der der Verbindungsbohrung (11) fluchtenden Rohrbohrung (20) von einer Hülse (21) vollständig abgedeckt ist, daß die Hülse (21) nur wenig länger als das Rohr (22) dick ist, und daß die Hülsenränder (23,24) die Rohrbohrungskanten (25,26) umklammern.

10. Vorrichtung nach Anspruch 9, **dadurch gekennzeichnet**, daß sie eine Druckhülse (38) hat, die einen Druckstab (39) abdichtend umschließt, und daß rohrseitig zwischen dem rohrseitigen Hülsenende (38') und dem rohrseitigen Druckstabende (39') eine den Druckstab (39) umgebende elastische Quetschhülse (40) vorhanden ist, deren Außendurchmesser (47) in Abhängigkeit von der relativen Axialstellung der Druckhülse (40) und des Druckstabs (39) veränderlich ist.

11. Vorrichtung nach Anspruch 10, **dadurch gekennzeichnet**, daß das Druckstabende (39') ein Gewindeende (41) hat, auf das ein Druckstück (42) aufgeschraubt ist, das die Quetschhülse (40) gegen das Druckhülsenende (38') drückt.

12. Vorrichtung nach Anspruch 10 oder 11, **dadurch gekennzeichnet,** daß der Außendurchmesser (46) der Druckhülse (38) größer ist, als der Außendurchmesser (47) der ungespreizten Quetschhülse (40).

13. Vorrichtung nach einem oder mehreren der Ansprüche 10 bis 11, **dadurch gekennzeichnet,** daß auf einem Kopf (43) der Druckhülse (38) ein Exzenterhebel (44) abstützbar ist, der am oberen Ende (45) des Druckstabs (39) schwenkbeweglich ist.

14. Vorrichtung nach einem oder meheren der Ansprüche 10 bis 13, **dadurch gekennzeichnet,** daß die Druckhülse (38) von einer Haltehülse (48) gleitbar umschlossen ist, die an ihrem unteren Ende ein Außengewinde (49), einen Einschraubanschlag (50) und Schraubwerkzeugkupplungsmittel (51) aufweist.

15. Vorrichtung nach Anspruch 14, **dadurch gekennzeichnet,** daß die Haltehülse (48) ein weiteres Außengewinde (52) hat, auf dem eine mit der Druckhülse (38) starr verbundende Führungsmutter (53) vorhanden ist, an der Schraubwerkzeugkupplungsmittel (54) vorhanden sind.

## Claims

1. Device for the machining of a workpiece, particularly a boring fitting for fluid-bearing pipes, comprising a pipe-engaging connecting unit (10) which has a connecting bore (11) whose axis extends radially in relation to the centre point of a pipe bore (20) and into whose thread (12) is screwed a fitting housing having a connecting spigot (13), with a sealing ring (31) located around the pipe bore (20) between the connecting unit (10) and the pipe, and with a protective sleeve (14) sealing off the thread (12) of the connecting bore (11) and abutted by the connecting spigot (13), **characterised in that** the protective sleeve (14) is arranged in a section (15) of the connecting bore on the pipe side and tight against the threads, and the end (13') of the connecting spigot (13) is pressed sealingly against the end (14') of the protective sleeve (14).

2. Device according to claim 1, **characterised in that** the protective sleeve (14) is screwed into the thread (12) of the connecting bore (11).

3. Device according to claim 1, **characterised in that** the protective sleeve (14) is pressed into the connecting bore (11).

4. Device according to claim 1 or 2, **characterised in that** the protective sleeve (14) is of corrosion-resistant metallic material.

5. Device according to one or more of claims 1 to 3, **characterised in that** the protective sleeve (14) is of plastics material.

6. Device according to one or more of claims 1 to 5, **characterised in that** the connecting bore (11) has an annular shoulder (16) on the pipe side, and the protective sleeve (14) has an annular face (17) by means of which the protective sleeve (14) is pressed against the annular shoulder (16).

7. Device according to one or more of claims 1 to 6, **characterised in that** the connecting spigot (13) and the protective sleeve (14) have an internal diameter (18) of the same size.

8. Device according to one or more of claims 1 to 7, **characterised in that** the connecting bore (11) is tightly screened off over its full length by the connecting spigot (13) and the protective sleeve (14).

9. Device according to one or more of claims 1 to 8, **characterised in that** the bore wall (19) of the pipe bore (20) which is in alignment with the connecting bore (11) is completely screened off by a sleeve (21), the sleeve (21) is only slightly longer than the pipe (22) is thick, and the sleeve edges (23, 24) wrap around the pipe bore edges (25, 26).

10. Device according to claim 9, **characterised in that** it comprises a pressure sleeve (38) which sealingly encircles a pressure rod (39), and that on the pipe side, between the pipe side sleeve end (38') and the pipe side pressure rod end (39'), there is provided an elastic compression sleeve (40) encircling the pressure rod (39) and the external diameter (47) of which is variable in dependence upon the relative axial position of the pressure sleeve (40) and the pressure rod (39).

11. Device according to claim 10, **characterised in that** the pressure rod end (39') has a threaded end (41) on to which a pressure member (42) is screwed which presses the compression sleeve (40) against the end (38') of the pressure sleeve.

12. Device according to claim 10 or 11, **characterised in that** the external diameter (46) of the pressure sleeve (38) is greater than the external diameter (47) of the unexpanded compression sleeve (40).

13. Device according to one or more of claims 10 to 11, **characterised in that** on a head (43) of the pressure sleeve (38) an eccentric lever (44) is supportable which is pivotally movable on the upper end (45) of the pressure rod (39).

14. Device according to one or more of claims 10 to 13, **characterised in that** the pressure sleeve (38) is slidably enclosed by a retaining sleeve (48) which at its lower end has an external thread (49), a screw stop (50) and screwing tool coupling means (51).

15. Device according to claim 14, **characterised in that** the retaining sleeve (48) has a further external thread (52) on which is provided a guide nut (53) which is connected rigidly to the pressure sleeve (38) and on which the screwing tool coupling means (54) are provided.

## Revendications

1. Dispositif pour l'usinage d'une pièce, en particulier accessoire de perçage pour des tuyaux par lesquels passe un fluide, comprenant une unité de liaison (10) qui entoure le tuyau et qui comporte un perçage de liaison (11) dont l'axe s'étend radialement sur le centre d'un perçage de tuyau (20) et dans le filetage (12) duquel est vissée une enveloppe d'accessoire pourvue d'un raccord (13), une bague d'étanchéité (31) qui est disposée entre l'unité de liaison (10) et le tuyau, autour du perçage de tuyau (20), et un manchon de protection (14) qui rend étanche le filetage (12) du perçage de liaison (11) et qui est sollicité par le raccord (13), **caractérisé** en ce que le manchon de protection (14) est disposé contre le filetage dans une section de perçage de liaison (15) située côté tuyau, et en ce que l'extrémité (13') du raccord (13) est pressée de façon étanche sur l'extrémité (14') du manchon de protection (14).

2. Dispositif selon la revendication 1, **caractérisé** en ce que le manchon de protection (14) est vissé dans le filetage (12) du perçage de liaison (11).

3. Dispositif selon la revendication 1, **caractérisé** en ce que le manchon de protection (14) est enfoncé dans le perçage de liaison (11).

4. Dispositif selon la revendication 1 ou 2, **caractérisé** en ce que le manchon de protection (14) se compose d'un matériau métallique résistant à la corrosion.

5. Dispositif selon l'une au moins des revendications 1 à 3, **caractérisé** en ce que le manchon de protection (14) se compose d'une matière plastique.

6. Dispositif selon l'une au moins des revendications 1 à 5,**caractérisé** en ce que le perçage de liaison (11) présente un épaulement annulaire (16), côté tuyau, et en ce que le manchon de protection (14) présente une surface annulaire (17) grâce à laquelle il est pressé contre l'épaulement annulaire (16).

7. Dispositif selon l'une au moins des revendications 1 à 6, **caractérisé** en ce que le raccord (13) et le manchon de protection (14) présentent un même diamètre intérieur (18).

8. Dispositif selon l'une au moins des revendications 1 à 7, **caractérisé** en ce que le perçage de liaison (11) est couvert sur toute sa longueur, de façon ajustée, par le raccord (13) et le manchon de protection (14)

9. Dispositif selon l'une au moins des revendications 1 à 8, **caractérisé** en ce que la paroi (19) du perçage de tuyau (20) qui se trouve dans l'alignement du perçage de liaison (11) est entièrement couverte par un manchon (21), en ce que le manchon (21) présente une longueur qui n'est que légèrement supérieure à l'épaisseur du tuyau (22), et en ce que les bords (23, 24) du manchon enserrent les arêtes (25, 26) du perçage du tuyau.

10. Dispositif selon la revendication 9, **caractérisé** en ce qu'il comporte un manchon de pression (38) qui entoure de façon étanche une barre de pression (39), et en ce qu'il est prévu, côté tuyau, entre l'extrémité (38') du manchon située côté tuyau et l'extrémité (39') de la barre de pression située côté tuyau, un manchon de serrage élastique (40) qui entoure la barre de pression (39) et dont le diamètre extérieur (47) est variable en fonction de la position axiale relative du manchon de pression (40) et de la barre de pression (39).

11. Dispositif selon la revendication 10, **caractérisé** en ce que l'extrémité (39') de la barre de pression a une extrémité filetée (41) sur laquelle est vissé un élément de pression (42) qui presse le manchon de serrage (40) contre l'extrémité (38') du manchon de pression.

12. Dispositif selon la revendication 10 ou 11, **caractérisé** en ce que le diamètre extérieur (46) du manchon de pression (38) est plus grand que le diamètre extérieur (47) du manchon de serrage (40) non élargi.

13. Dispositif selon la revendication 10 ou 11, **caractérisé** en ce qu'il est prévu, apte à s'appuyer sur une tête (43) du manchon de pression (38), un levier d'excentrique (44) qui est apte à pivoter au niveau de l'extrémité supérieure (45) de la barre de pression (39).

14. Dispositif selon l'une des revendications 10 à 13, **caractérisé** en ce que le manchon de pression (38) est entouré, en étant apte à coulisser, par un manchon de fixation (48) qui présente à son extrémité inférieure un filetage extérieur (49), une butée de vissage (50) et des moyens d'accouplement pour outils de vissage (51).

15. Dispositif selon la revendication 14, **caractérisé** en ce que le manchon de fixation (48) présente un second filetage extérieur (52) sur lequel il est prévu un écrou de guidage (53) qui est relié rigidement au manchon de pression (38) et qui porte des moyens d'accouplement pour outils de vissage (54).
